# EUROPEAN PATENT APPLICATION

(11) **EP 4 129 630 A1**
(43) Date of publication of application: **08.02.2023**
(21) Application number: 21775553.7
(22) Date of filing: 16.03.2021
(51) Int. Cl.: B29C 63/02, B29C 65/48

(54) **LAMINATION METHOD AND LAMINATION DEVICE**

(30) Priority: 27.03.2020 JP 2020057494
(71) Applicant: DIC Corporation, Tokyo 174-8520 (JP)
(72) Inventor: TAKAHASHI, Shigekazu, Tokyo 174-8520 (JP); TAKADA, Choichi, Tokyo 103-8233 (JP); MIURA, Hidenobu, Higashihiroshima-shi, Hiroshima 739-0146 (JP); TSURUOKA, Ayumi, Higashihiroshima-shi, Hiroshima 739-0146 (JP)
(74) Representative: Beckmann, Claus
(86) International application number: PCT/JP2021/010565
(87) International publication number: WO 2021/193226

(57) **Abstract**

[Abstract] A lamination method, includes: a first coating step of applying any one of a main agent M and a curing agent H of a two-component curable adhesive as a coating liquid to a first web W 1; a second coating step of applying the other one of the main agent M and the curing agent H as a coating liquid to a second web W2; and a bonding step of bonding a coating liquid-coated surface of the first web W1 and a coating liquid-coated surface of the second web W2, and of combining the main agent M and the curing agent H to increase a molecular weight. In addition, in the first coating step and the second coating step, the main agent M or the curing agent H is applied by a gravure coater. Accordingly, cleaning properties of a roll can be excellent, and foreign matter inclusion can be reduced. In addition, a coating amount can be stabilized, and product quality can be improved.

## Description

### TECHNICAL FIELD

The present invention relates to a lamination method and a lamination device.

### BACKGROUND ART

In the related art, a lamination device that applies an adhesive to a web, bonds a plurality of webs, and produce a composite film is developed. For example, in the lamination device of PTL 1, one web is coated with a two-component curable adhesive by using a roll coater, and is bonded to the other web to produce a composite film.

One of representative two-component curable adhesives is a reactive adhesive in which an isocyanate compound and a hydroxy compound are combined. Examples of the other two-component curable adhesive include a reactive adhesive in which an epoxy compound and an amine compound are combined (for example, refer to PTL 2), a reactive adhesive in which an epoxy compound and a polyurethane polyurea resin having a primary amino group in a molecular structure are combined (for example, refer to PTL 2), and the like. In addition, a curing system having a carboxyl group and a carbodiimide group is also proposed (for example, refer to PTL 3).

### CITATION LIST

### PATENT LITERATURE

PTL 1: JP-A-58-122074
PTL 2: Japanese Patent No. 5651172
PTL 3: Japanese Patent No. 6512256
PTL 4: International Publication No. 2018/128032

### SUMMARY OF INVENTION

### TECHNICAL PROBLEM

In the lamination device of PTL 1, a main agent and a curing agent of the two-component curable adhesive are mixed in advance, and are stored in a liquid reservoir. Then, the lamination device applies the adhesive mixed liquid that is stored to the web by using the roll coater. In such a lamination device, the curing of the two-component curable adhesive is started in the liquid reservoir. Therefore, in a case of multi-product production and frequent product switching, such as a case of producing a food wrapper that is laminated by using a polyurethane resin, it takes time and effort to clean each roll to which the adhesive is attached, and a production efficiency is low. In addition, in a case where the cleaning is insufficient, foreign matters due to the adhesive are included in the bonded surface, and product quality may be degraded.

The invention has been made in consideration of such circumstances described above, and an object thereof is to provide a lamination method and a lamination device in which cleaning properties can be excellent, a quality loss due to foreign matter inclusion or the like can be reduced, and a production efficiency can be improved even in a case where products are frequently switched.

### SOLUTION TO PROBLEM

In order to attain the object described above, a lamination method according to the first viewpoint of the invention, includes:
a first coating step of applying any one of a main agent and a curing agent of a two-component curable adhesive as a coating liquid to a first web;
a second coating step of applying the other one of the main agent and the curing agent that is not applied to the first web as a coating liquid to a second web; and
a bonding step of bonding a coating liquid-coated surface of the first web and a coating liquid-coated surface of the second web, and of reacting the main agent with the curing agent to increase a molecular weight,
in which in the first coating step and the second coating step,
the main agent or the curing agent is applied by a gravure coater.

In addition, the main agent may be polyol, and the curing agent may be isocyanate, and
in the bonding step,
the main agent and the curing agent may be combined to be a polyurethane resin.

In addition, the gravure coater may be an offset gravure coater including a chamber doctor.

In addition, a coating amount of the first coating step and a coating amount of the second coating step may be 0.3 to 3.0 g/m².

In addition, a lamination device according to the second viewpoint of the invention, includes:
a first coating unit applying any one of a main agent and a curing agent of a two-component curable adhesive as a coating liquid to a first web;
a second coating unit applying the other one of the main agent and the curing agent that is not applied to the first web as a coating liquid to a second web; and
a bonding unit bonding a coating liquid-coated surface of the first web and a coating liquid-coated surface of the second web, and reacting the main agent with the curing agent to increase a molecular weight,
in which the first coating unit and the second coating unit are a gravure coater.

The main agent may be polyol, and the curing agent may be isocyanate, and
the bonding unit may combine the main agent and the curing agent to be a polyurethane resin.

### ADVANTAGEOUS EFFECTS OF INVENTION

According to a lamination method and a lamination device of the invention, a main agent and a curing agent are applied to separate webs by a gravure coater, and the webs are bonded, and thus, cleaning properties of a roll can be excellent, foreign matter inclusion can be reduced, and a coating amount can be stabilized. Therefore, product quality can be improved. In addition, even in a case where products are frequently switched, a production efficiency can be improved.

### BRIEF DESCRIPTION OF DRAWINGS

Fig. 1 is a front view of a lamination device according to an embodiment.
Fig. 2 is a front view illustrating a configuration of main parts of a first coating unit.
Fig. 3 is a front view illustrating a configuration of a direct gravure type gravure coater.
Figs. 4(A), 4(B), and 4(C) are front views illustrating examples of arrangement and a rotation direction of a gravure roll, an offset roll, and an impression cylinder.

### DESCRIPTION OF EMBODIMENTS

Hereinafter, a lamination device and a lamination method according to an embodiment of the invention will be described with reference to the drawings.

A lamination device 1 according to this embodiment is a lamination device that laminates a food wrapper, and is a device that bonds a first web W1 and a second web W2 by using a two-component curable adhesive. The type of two-component curable adhesive is not particularly limited insofar as a main agent M and a curing agent H are reacted to increase the molecular weight, and thus, exhibit an adhesion force.

Examples of such a two-component curable adhesive include a two-component curable adhesive using an isocyanate compound (the main agent M) and a hydroxy compound (the curing agent H); a two-component curable adhesive using an isocyanate compound (the main agent M) and a hydroxy compound having an amino group in a molecular structure (the curing agent H); a two-component curable adhesive using an epoxy compound (the main agent M) and an amine compound (the curing agent H); a two-component curable adhesive using an epoxy compound (the main agent M) and a polyurethane polyurea resin having a primary amino group in a molecular structure (the curing agent H); a two-component curable adhesive using a compound having a carboxyl group (the main agent M) and a compound having a carbodiimide group (the curing agent H), and the like. The two-component curable adhesive according to this embodiment is a solventless urethane-based adhesive that is used in the food wrapper, and is an adhesive in which the main agent M that is polyol and the curing agent H that is isocyanate are combined to be a polyurethane resin.

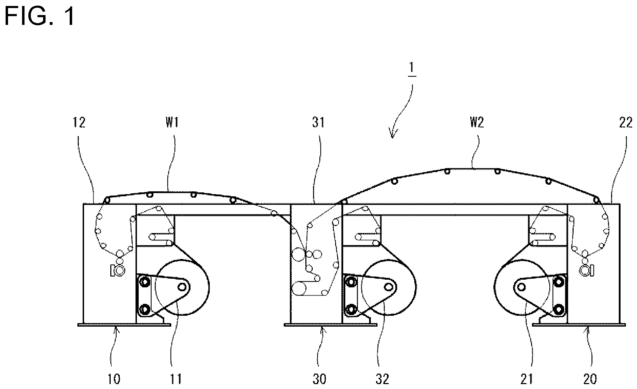

As illustrated in Fig. 1, the lamination device 1 includes a first coating unit 10, a second coating unit 20, and a laminator 30.

The first coating unit 10 includes a first unwinding unit 11 that unwinds the first web W1, and a first coating unit 12 that applies the main agent M of the two-component curable solventless-based adhesive as a coating liquid to the first web W1 unwound from the first unwinding unit 11. The first web W1 is rotatably mounted on the first unwinding unit 11.

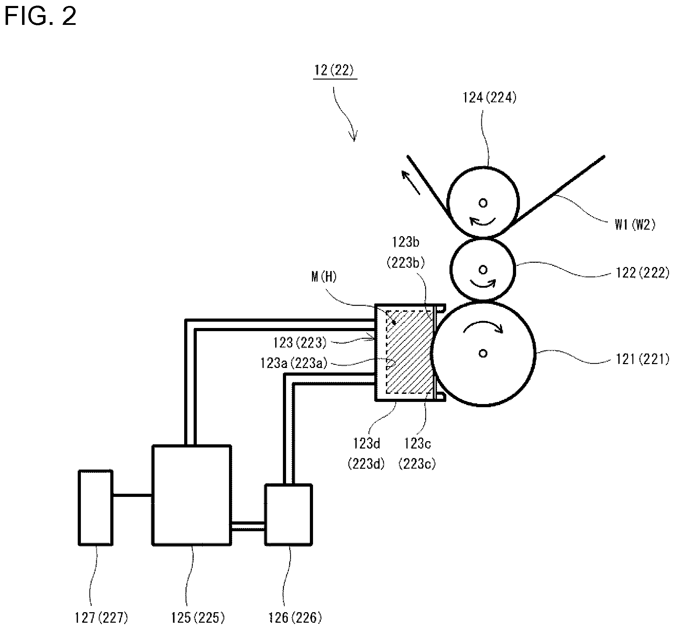

The first coating unit 12 is a gravure coater that performs gravure coating with the main agent M. As illustrated in Fig. 2, the first coating unit 12 according to this embodiment is an offset gravure coater that includes a chamber doctor 123, and transfers and applies the main agent M applied to a plate cylinder. Specifically, the first coating unit 12 includes a gravure roll 121, an offset roll 122, a chamber doctor 123, an impression cylinder 124, a coating liquid tank 125, a pump 126, and a temperature adjuster 127.

The gravure roll 121 is a metal roll that is rotatably supported on the first coating unit 12, and is rotatively driven by a drive unit that is not illustrated. A plurality of concave portions (a gravure pattern) are formed on the surface of the gravure roll 121, for example, by laser engraving. By changing the volume, an opening ratio, the depth, or the like of the concave portion, the amount of coating liquid to be applied to the surface of the gravure roll 121 can be adjusted. More specifically, by adjusting the number of lines of the gravure roll 121, a coating amount can be adjusted. A gravure pattern that is applied to the surface of the gravure roll 121 is not particularly limited, but in a continuous cell shape such as a diagonal line, thickness unevenness is likely to occur, and thus, a hole-type pattern is preferably used. A honeycomb pattern is more preferably used.

As illustrated in Fig. 2, the chamber doctor 123 is a sealed container that stores the main agent M. The chamber doctor 123 is arranged on one side in a radial direction of the gravure roll 121.

The chamber doctor 123 includes a storage portion 123a for storing the main agent M. The storage portion 123a is open to the gravure roll 121 side. Then, a part of the outer circumferential surface of the gravure roll 121 is dipped in the main agent M stored in the storage portion 123a.

The chamber doctor 123 includes a plate-shaped doctor blade 123b. The doctor blade 123b protrudes to the gravure roll 121 from the upper end portion of the opening of the storage portion 123a. The material of the doctor blade 123b is not particularly limited, and may be a metal or a resin. The material of the doctor blade 123b according to this embodiment is stainless steel.

The tip portion of the doctor blade 123b is pressure-welded to the outer circumferential surface of the gravure roll 121, and seals the storage portion 123a on the downstream side in a roll rotation direction. In addition, the doctor blade 123b scrapes off the excessive main agent M attached to the outer circumferential surface of the gravure roll 121 by a rotation operation of the gravure roll 121, and weighs the excessive main agent. The doctor blade 123b according to this embodiment is provided to be in the reverse direction to a rotation direction of the gravure roll 121. Accordingly, the main agent M can be more accurately weighed.

In addition, the chamber doctor 123 includes a plate-shaped seal plate 123c. The seal plate 123c protrudes to the gravure roll 121 from the lower end portion of the opening of the storage portion 123a. The material of the seal plate 123c is not particularly limited, and for example, may be a resin such as polyester.

The tip portion of the seal plate 123c is pressure-welded to the outer circumferential surface of the gravure roll 121, and seals the storage portion 123a on the upstream side in the roll rotation direction.

In addition, the chamber doctor 123 includes a resin side plate 123d. The side plate 123d is attached to each of both lateral surfaces of the chamber doctor 123, that is, each of both end portions of the gravure roll 121 in a rotation axis direction.

As illustrated in Fig. 2, the lateral surface of the side plate 123d on a gravure roll 121 side is in the shape of an arc along the gravure roll 121, and is pressure-welded to the gravure roll 121.

The storage portion 123a is sealed by the doctor blade 123b, the seal plate 123c, a pair of side plates 123d, and the gravure roll 121.

The offset roll 122 is a rubber roll that is rotatably supported on the first coating unit 12 to be parallel to the gravure roll 121, and is rotatively driven by a drive unit that is not illustrated. The offset roll 122 is arranged such that the outer circumferential surface of the offset roll 122 is in contact with the outer circumferential surface of the gravure roll 121, and transfers the main agent M applied to the outer circumferential surface of the gravure roll 121.

In general, in a direct gravure method in which the coating liquid of the gravure roll 121 that is the plate cylinder is directly applied to the web, a problem such as damage on the vapor deposition of the web may occur due to a speed difference between the gravure roll 121 and the web. Therefore, it is difficult to arbitrarily adjust a speed ratio between the gravure roll 121 and the web. As with this embodiment, by applying the coating liquid of the gravure roll 121 to the first web W1 through the rubber offset roll 122, an adjustment range of the speed ratio between the gravure roll 121 and the first web W1 can be broadened. Accordingly, the coating amount of the main agent M with respect to the first web W 1 can be easily adjusted. Therefore, it is not necessary to separate a plurality of gravure rolls 121 with different numbers of lines, and the production cost of a composite film can be reduced.

The size of the diameter of the offset roll 122 is not particularly limited, and for example, the diameter is 60 to 250 mm, preferably 60 to 200 mm, and more preferably 60 to 120 mm. The same applies to the diameters of the gravure roll 121 and the impression cylinder 124. In general, it is preferable that the diameter of the offset roll 122 is small since the mist can be reduced, but there is a concern that the offset roll 122 is bent. Therefore, the diameter may be suitably selected within a range not causing a problem due to the deformation of the offset roll 122. The offset roll 122 according to this embodiment is linearly arranged to be interposed between the gravure roll 121 and the impression cylinder 124, and thus, even in a case where the diameter is small, it is possible to prevent the offset roll from being bent.

The impression cylinder 124 is a roll that interposes the first web W1 between the impression cylinder and the offset roll 122, and transports the first web W1. In addition, the impression cylinder 124 pressure-welds the first web W1 to the offset roll 122, and transfers the main agent M applied to the outer circumferential surface of the offset roll 122 to the first web W1. The material of the impression cylinder 124 is not particularly limited, and for example, rubber, aluminum, or the like can be used. Specifically, in a case of improving transfer properties of the main agent M, rubber is used, in a case of improving the ease of tension control of the first web W1 and of suppressing bentness, aluminum, carbon, or iron is used, and in a case of a surface treatment, chromium plating, ceramic, or the like may be selected in consideration of a coating condition.

The coating liquid tank 125 is a container that stores the main agent M. As illustrated in Fig. 2, the coating liquid tank 125 is connected to the pump 126 that allows the main agent M to flow in the chamber doctor 123 through pipe arrangement. In addition, the coating liquid tank 125 is connected to the chamber doctor 123 through the pipe arrangement. Accordingly, the main agent M overflowed from the storage portion 123a of the chamber doctor 123 is collected in the coating liquid tank 125.

The pump 126 is connected to the coating liquid tank 125 and the chamber doctor 123 through the pipe arrangement. The pump 126 supplies the main agent M that is stored in the coating liquid tank 125 to the storage portion 123a of the chamber doctor 123. The pump 126, for example, is a sinusoidal pump, and may be any pump that is compatible with the main agent M heated for temperature adjustment.

The temperature adjuster 127 adjusts the temperature of the main agent M that is stored in the coating liquid tank 125. Accordingly, the temperature of the main agent M is kept constant, and the viscosity of the main agent M is stabilized. More specifically, in the two-component curable solventless-based adhesive according to this embodiment, the viscosity of the adhesive is decreased by heating to be a viscosity suitable for coating. Further, the first coating unit 12 according to this embodiment includes the sealed chamber doctor 123, and thus, the temperature and the viscosity of the main agent M can be further stabilized. The temperature adjuster 127, for example, is a water temperature controller that heats water which is a heat medium with a heater, and circulates the water around the main agent M stored in the coating liquid tank 125.

The second coating unit 20 has the same configuration as that of the first coating unit 10, and includes a second unwinding unit 21 that unwinds the second web W2, and a second coating unit 22 that applies the curing agent H of the two-component curable solventless-based adhesive as a coating liquid to the second web W2 unwound from the second unwinding unit 21. The second web W2 is rotatably mounted on the second unwinding unit 21.

The second coating unit 22 is a gravure coater that performs gravure coating with the curing agent H. The second coating unit 22 according to this embodiment has the same configuration as that of the first coating unit 12 illustrated in Fig. 2, and is an offset gravure coater that includes a chamber doctor 223, and transfers and applies the curing agent H applied to the plate cylinder. The second coating unit 22 includes a gravure roll 221, an offset roll 222, a chamber doctor 223, an impression cylinder 224, a coating liquid tank 225, a pump 226, and a temperature adjuster 227. The configuration of each part is the same as that of the first coating unit 12, and thus, the detailed description will be omitted.

As illustrated in Fig. 1, the laminator 30 includes a bonding unit 31 that bonds the first web W1 unwound from the first coating unit 12 and the second web W2 unwound from the second coating unit 22, and a winding unit 32 that winds the bonded webs.

The bonding unit 31 bonds a coating liquid-coated surface of the first web W 1 unwound from the first coating unit 12 and a coating liquid-coated surface of the second web W2 unwound from the second coating unit 22. In the bonding unit 31, the main agent M applied to the first web W1 and the curing agent H applied to the second web W2 are mixed to cause a chemical reaction, and the molecular weight is increased. Accordingly, the curing of the two-component curable solventless-based adhesive is started, and the first web W1 and the second web W2 are bonded and fixed.

The winding unit 32 winds the composite film that is formed by bonding the first web W1 and the second web W2 in the bonding unit 31.

Subsequently, a lamination method using the lamination device 1 according to this embodiment will be described.

In a case where the operation of the lamination device 1 is started, the first web W1 is unwound from the first unwinding unit 11 to the first coating unit 12 that performs a first coating step. In the first coating unit 12, the rotation of the gravure roll 121, the offset roll 122, and the impression cylinder 124 is started in a direction illustrated by an arrow in Fig. 2.

According to the rotation operation of the gravure roll 121, the main agent M in the chamber doctor 123 is applied to the surface of the gravure roll 121. Since the main agent M is kept at a predetermined temperature in the chamber doctor 123, thereby having a predetermined viscosity, the coating amount is easily adjusted.

The main agent M applied to the gravure roll 121 is weighed by being scraped off with the doctor blade 123b of the chamber doctor 123.

The rotation direction of the gravure roll 121 may be any one of a forward rotation that is the same direction as the rotation direction of the offset roll 122 and a reverse rotation that is the reverse direction to the rotation direction of the offset roll 122. The rotation direction of the gravure roll 121 according to this embodiment with respect to the offset roll 122 is the forward rotation. That is, as illustrated in Fig. 2, the gravure roll 121 transfers the main agent M to the offset roll 122 while rotating in the same direction as that of the offset roll 122.

In addition, the rotation direction of the offset roll 122 may be any one of a forward rotation that is the same direction as a transport direction of the first web W 1 and a reverse rotation that is the reverse direction to the transport direction of the first web W1. The rotation direction of the offset roll 122 according to this embodiment with respect to the first web W1 is the forward rotation. That is, as illustrated in Fig. 2, the offset roll 122 transfers the main agent M to the first web W1 while rotating in the same direction as the transport direction of the first web W 1.

Then, the first coating unit 12 unwinds the first web W1 coated with the main agent M to the laminator 30 that performs a bonding step.

The second web W2 is unwound from the second unwinding unit 21 to the second coating unit 22 that performs a second coating step. In the second coating unit 22, as with the first coating unit 12 illustrated in Fig. 2, the rotation of the gravure roll 221, the offset roll 222, and the impression cylinder 224 is started.

According to the rotation operation of the gravure roll 221, the curing agent H in the chamber doctor 223 is applied to the surface of the gravure roll 221. Since the curing agent H is kept at a predetermined temperature in the chamber doctor 223, thereby having a predetermined viscosity, the coating amount is easily adjusted.

The curing agent H applied to the gravure roll 221 is weighed by being scraped off with a doctor blade 223b of the chamber doctor 223.

The rotation direction of the gravure roll 221 may be any one of a forward rotation that is the same direction as the rotation direction of the offset roll 222 and a reverse rotation that is the reverse direction to the rotation direction of the offset roll 222. The rotation direction of the gravure roll 221 according to this embodiment with respect to the offset roll 222 is the forward rotation. That is, as with the first coating unit 12 illustrated in Fig. 2, the gravure roll 221 transfers the curing agent H to the offset roll 222 while rotating in the same direction as that of the offset roll 222.

In addition, the rotation direction of the offset roll 222 may be any one of a forward rotation that is the same direction as the transport direction of the second web W2 and a reverse rotation that is the reverse direction to the transport direction of the second web W2. The rotation direction of the offset roll 222 according to this embodiment with respect to the second web W2 is the forward rotation. That is, as with the first coating unit 12 illustrated in Fig. 2, the offset roll 222 transfers curing agent H to the second web W2 while rotating in the same direction as the transport direction of the second web W2.

Then, the second coating unit 22 unwinds the second web W2 coated with the curing agent H to the laminator 30 that performs the bonding step.

Examples of the coating amount of the main agent M and the curing agent H in the urethane-based adhesive according to this embodiment that is used in the food wrapper are as follows. In an application to non-boiling light wrapping, the main agent M that is polyol is in a range of 1.0 to 2.0 g/m², the curing agent H that is isocyanate is in a range of 0.5 to 1.0 g/m², more preferably, the main agent M is in a range of 1.0 to 1.5 g/m², and the curing agent H is in a range of 0.5 to 0.8 g/m². In addition, in an application to a retort pouch, the main agent M is in a range of 1.2 to 3.0 g/m², and the curing agent H is in a range of 0.6 to 1.5 g/m², more preferably, the main agent M is in a range of 1.2 to 2.0 g/m², and the curing agent H is in a range of 0.6 to 1.0 g/m².

In this embodiment, in the first coating unit 12, the main agent M is applied, and in the second coating unit 22, the curing agent H is applied, but the first coating unit 12 and the second coating unit 22 have basically the same configuration, and thus, in the first coating unit 12, the curing agent H may be applied, and in the second coating unit 22, the main agent M may be applied. Therefore, it is preferable that the range of the coating amount of the first coating unit 12 and the second coating unit 22 is 0.3 to 3.0 g/m², which is the range of the coating amount of the main agent M and the curing agent H. In addition, in this embodiment, the main agent M and the curing agent H are applied by using the gravure coater that is capable of accurately adjusting the coating amount, and thus, coating quality can be improved. Here, the suitable number of lines of the gravure rolls 121 and 221 in a case where the coating amount is 0.3 to 3.0 g/m² is 100 to 2000 lines/inch.

The bonding unit 31 of the laminator 30 bonds the first web W1 and the second web W2 such that the coating liquid-coated surface of the first web W 1 unwound from the first coating unit 12 is in contact with the coating liquid-coated surface of the second web W2 unwound from the second coating unit 22. Accordingly, the main agent M applied to the first web W1 and the curing agent H applied to the second web W2 are mixed, and the curing of the two-component curable solventless-based adhesive is started. More specifically, the main agent M that is polyol and the curing agent H that is isocyanate are combined to be a polyurethane resin. Accordingly, the first web W1 and the second web W2 adhere to each other.

The composite film produced by bonding the first web W1 and the second web W2 in the bonding unit 31 is transported to the winding unit 32. Then, the winding unit 32 winds the composite film.

As described above, the lamination device 1 according to this embodiment applies the main agent M and the curing agent H of the two-component curable solventless-based adhesive to separate webs by the gravure coater, and bonds the webs, and thus, it is possible to easily clean the roll while preventing the adhesive after the curing is started from being attached to the roll. Therefore, the inclusion of foreign matters due to insufficient cleaning can be reduced, and product quality can be improved.

In addition, even in a case of multi-product production and frequent product switching, such as a food wrapper that is laminated by using a polyurethane resin, a production efficiency can be improved. In particular, the main agent M and the curing agent H are applied by using the gravure coater that easily stabilizes the coating amount by a roll coating method and is capable of accurately adjusting the coating amount, and thus, even in a case of using the solventless two-component curable adhesive of which the demand has increased from the viewpoint of environmental protection, the coating quality and the production efficiency can be improved.

In addition, the main agent M and the curing agent H are not mixed in advance, but are mixed in the bonding unit 31, and thus, it is possible to use an adhesive that is cured fast regardless of the pot life. Therefore, a problem such as the misalignment of the web when bonding the webs can be suppressed, and the quality of the composite film can be improved.

In addition, in this embodiment, the first coating unit 12 and the second coating unit 22 are the gravure coater including the chamber doctors 123 and 223. Accordingly, the main agent M and the curing agent H are not exposed to the outside air, and thus, the degradation of the coating liquid can be suppressed, and viscosity adjustment according to temperature adjustment can be easily performed. In particular, the second coating unit 22 includes the chamber doctor 223, and thus, it is possible to prevent the moisture in the air and isocyanate that is the curing agent H from being combined and the curing agent H from being degraded.

In addition, in this embodiment, the first coating unit 12 and the second coating unit 22 are the offset gravure coater. Accordingly, a rotation speed of the gravure rolls 121 and 221 to a feeding speed of the first web W1 and the second web W2 (the speed ratio) can be easily adjusted. More specifically, the speed ratio can be adjusted in accordance with the rotation speed of the gravure rolls 121 and 221 and a rotation speed of the offset rolls 122 and 222. Accordingly, the coating amount and a film thickness of the main agent M and the curing agent H can be easily adjusted, and a homogeneously coated surface can be obtained. Therefore, the quality of the composite film can be improved. In addition, the coating amount can be easily increased and decreased by adjusting the speed ratio, and thus, it takes less time and effort to exchange the gravure roll, and even in a case where the products are frequently switched, the production efficiency can be improved.

In addition, the lamination device 1 according to this embodiment may gear a coating amount measuring instrument that measures the coating amount of the main agent M and the curing agent H to a controller that controls the rotation speed of the gravure rolls 121 and 221 and the offset rolls 122 and 222. Accordingly, a speed ratio of the gravure rolls 121 and 221 and the offset rolls 122 and 222 can be automatically adjusted on the basis of the measured coating amount. Therefore, the coating amount can be kept at a suitable value set in advance, and the responsiveness of a coating amount ratio of the main agent M and the curing agent H can be improved.

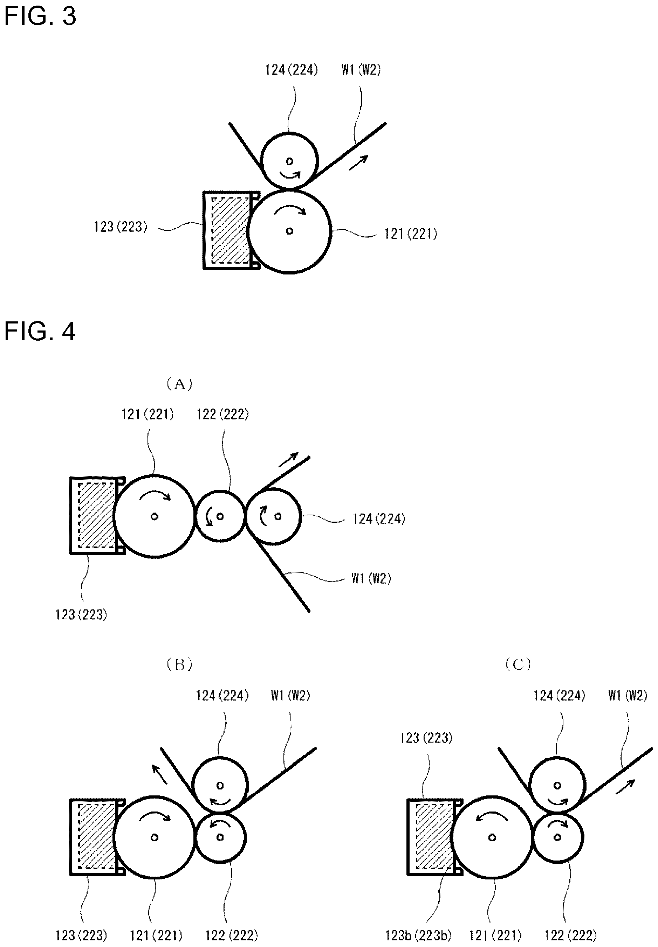

The first coating unit 12 and the second coating unit 22 according to this embodiment are the offset gravure coater, but the invention is not limited thereto. For example, in a case where the speed ratio of the gravure roll 121 and the first web W1, and the speed ratio of the gravure roll 221 and the second web W2 are suitable, and the coating quality is excellent, both or any one of the first coating unit 12 and the second coating unit 22 may be a direct gravure type coater illustrated in Fig. 3. Accordingly, the structure of the first coating unit 12 and the second coating unit 22 can be simplified, and the maintenability of the lamination device 1 can be improved.

In addition, the first coating unit 12 and the second coating unit 22 are the gravure coater, and thus, even in a case of using a coating liquid that has a low viscosity and causes a problem such as liquid dripping in the roll coater, the liquid dripping can be prevented, and the coating quality can be improved. In addition, the configuration of the first coating unit 12 and the second coating unit 22 can be simplified, and the lamination device 1 can be downsized.

In the first coating unit 12 and the second coating unit 22 according to the embodiment described above, only the temperature of the main agent M or the curing agent H stored in the coating liquid tanks 125 and 225 can be adjusted by each of the temperature adjusters 127 and 227, but the invention is not limited thereto. For example, the temperature of the main agent M or the curing agent H stored in the storage portions 123a and 223a of the chamber doctors 123 and 223 may be adjusted, or the temperature of the pipe arrangement in the chamber doctors 123 and 223, the coating liquid tanks 125 and 225, and the pumps 126 and 226 may be adjusted. In addition, the temperature of the gravure rolls 121 and 221, the offset rolls 122 and 222, and the impression cylinders 124 and 224 may be adjusted. Accordingly, the viscosity of the main agent M and the curing agent H when coating can be stabilized, and the coating quality can be improved.

In addition, as illustrated in Fig. 1, the laminator 30 according to the embodiment described above is arranged between the first coating unit 10 and the second coating unit 20, but the invention is not limited thereto. For example, the second coating unit 20 may be arranged between the first coating unit 10 and the laminator 30. In addition, the first coating unit 10 and the second coating unit 20 may be arranged by being switched. Accordingly, the layout of each part can be optimized, and the lamination device 1 can be downsized.

In addition, in the embodiment described above, as illustrated in Fig. 2, the gravure rolls 121 and 221, the offset rolls 122 and 222, and the impression cylinders 124 and 224 are arranged in parallel in a vertical direction, but the invention is not limited thereto. For example, as illustrated in Fig. 4(A), the gravure rolls 121 and 221, the offset rolls 122 and 222, and the impression cylinders 124 and 224 may be arranged in parallel in a horizontal direction. In addition, as illustrated in Fig. 4(B), the gravure rolls 121 and 221 and the offset rolls 122 and 222 may be arranged on the lower side of the impression cylinders 124 and 224. In addition, the gravure rolls 121 and 221 and the offset rolls 122 and 222 may be arranged on the upper side of the impression cylinders 124 and 224 by flipping Fig. 4(B) vertically.

In addition, in the embodiment described above, the gravure rolls 121 and 221 are arranged to rotate toward the upper side from the lower side of the chamber doctors 123 and 223, but the invention is not limited thereto. For example, as illustrated in Fig. 4(C), the gravure rolls 121 and 221 may be arranged to rotate toward the lower side from the upper side of the chamber doctors 123 and 223. In this case, the doctor blade 123b is arranged on the lower side of the chamber doctors 123 and 223 that is the downstream side in the roll rotation direction.

In addition, in the embodiment described above, the gravure rolls 121 and 221 and the offset rolls 122 and 222 are rotatively driven by the drive unit, and the speed ratio of the gravure roll 121 and the first web W1, or the speed ratio of the gravure roll 221 and the second web W2 is adjusted in accordance with each of the rotation speeds, but the invention is not limited thereto. For example, the impression cylinders 124 and 224 may be rotatively driven by the drive unit, and the speed ratio may be adjusted by the offset rolls 122 and 222 and the impression cylinders 124 and 224. Accordingly, for example, the film thickness (coating amount) of the coating liquid can be adjusted between the gravure rolls 121 and 221 and the offset rolls 122 and 222, and the appearance of the coated surface can be adjusted between the offset rolls 122 and 222 and the impression cylinders 124 and 224.

In the invention, various embodiments and modifications can be made without departing from the broad spirit and scope of the invention. In addition, the embodiment described above is for describing the invention, and does not limit the scope of the invention. That is, the scope of the invention is indicated by the claims but not the embodiment. Then, various modifications made within the scope of the claims and within the scope of the meaning of the invention equivalent thereto are considered to be within the scope of the invention.

### REFERENCE SIGNS LIST

1: Lamination device
10: First coating unit
11: First unwinding unit
12: First coating unit
20: Second coating unit
21: Second unwinding unit
22: Second coating unit
121, 221: Gravure roll
122, 222: Offset roll
123, 223: Chamber doctor
123a, 223a: Storage portion
123b, 223b: Doctor blade
123c, 223c: Seal plate
123d, 223d: Side plate
124, 224: Impression cylinder
125, 225: Coating liquid tank
126, 226: Pump
127, 227: Temperature adjuster
30: Laminator
31: Bonding unit
32: Winding unit
M: Main agent
H: Curing agent
W1: First web
W2: Second web

## Claims

1. A lamination method, comprising:
a first coating step of applying any one of a main agent and a curing agent of a two-component curable adhesive as a coating liquid to a first web;
a second coating step of applying the other one of the main agent and the curing agent that is not applied to the first web as a coating liquid to a second web; and
a bonding step of bonding a coating liquid-coated surface of the first web and a coating liquid-coated surface of the second web, and of reacting the main agent with the curing agent to increase a molecular weight,
wherein in the first coating step and the second coating step,
the main agent or the curing agent is applied by a gravure coater.

2. The lamination method according to claim 1,
wherein the main agent is polyol, and the curing agent is isocyanate, and
in the bonding step,
the main agent and the curing agent are combined to be a polyurethane resin.

3. The lamination method according to claim 1 or 2,
wherein the gravure coater is an offset gravure coater including a chamber doctor.

4. The lamination method according to any one of claims 1 to 3,
wherein a coating amount of the first coating step and a coating amount of the second coating step are 0.3 to 3.0 g/m².

5. A lamination device, comprising:
a first coating unit applying any one of a main agent and a curing agent of a two-component curable adhesive as a coating liquid to a first web;
a second coating unit applying the other one of the main agent and the curing agent that is not applied to the first web as a coating liquid to a second web; and
a bonding unit bonding a coating liquid-coated surface of the first web and a coating liquid-coated surface of the second web, and reacting the main agent with the curing agent to increase a molecular weight,
wherein the first coating unit and the second coating unit are a gravure coater.

6. The lamination device according to claim 5,
wherein the main agent is polyol, and the curing agent is isocyanate, and
the bonding unit combines the main agent and the curing agent to be a polyurethane resin.
